# EUROPÄISCHE PATENTANMELDUNG

(11) **EP 1 598 486 A2**
(43) Veröffentlichungstag der Anmeldung: **23.11.2005**
(21) Anmeldenummer: 05103188.8
(22) Anmeldetag: 20.04.2005
(51) Int. Cl.: E03B 3/16

(54) **Steigleitungsrohr für einen Tiefbrunnen**

(30) Priorität: 17.05.2004 DE 202004008061 U
(71) Anmelder: Stüwa Konrad Stükerjürgen GmbH, 33397 Rietberg (DE)
(72) Erfinder: Stükerjürgen, Ralf, 33397 Rietberg (DE)
(74) Vertreter: Dantz, Jan Henning

(57) **Zusammenfassung**

Bei einem Steigleitungsrohr (1), insbesondere für einen Tiefbrunnen zur Förderung von Wasser aus größeren Tiefen, ist ein Vakuum-Doppelrohr mit einem evakuierten Ringraum (2) ausgebildet vorgesehen, das an einem stimseitigen Ende mit einem Gewindezapfen und am anderen Ende mit einer dem Durchmesser des Gewindezapfens entsprechenden Gewindebohrung (5) versehen ist. Erfindungsgemäß ist der evakuierte Ringsraum (2) des Vakuum-Doppelrohres mit einer mit einem Gewinde versehenen Absaugbohrung (7) ausgestattet, die durch eine Abdichtschraube (8) abgedichtet ist. Dies stellt eine einfache und preiswerte Möglichkeit dar, den evakuierten Ringraum einwandfrei abzudichten ohne dass aufwendige Ventile erforderlich sind.

## Beschreibung

Die vorliegende Erfindung betrifft ein Steigleitungsrohr insbesondere für einen Tiefbrunnen zur Förderung von Wasser aus größeren Tiefen, wobei das Steigleitungsrohr als Vakuum-Doppelrohr mit einem evakuierten Ringraum ausgebildet und an einem stirnseitigen Ende mit einem Gewindezapfen und am anderen Ende mit einer dem Durchmesser des Gewindezapfens entsprechenden Gewindebohrung versehen ist.

Steigleitungsrohre der vorerwähnten Art sind an sich bekannt und werden in bestimmten, noch gut handhabbaren Längen vorgefertigt und dann baustellenseitig durch Zusammenschrauben mehrerer derartiger Steigleitungsrohre zu einer kompletten Steigleitung zusammengeschraubt.

Da derartige Steigleitungsrohre dazu dienen, meist Thermalwasser aus großen Tiefen zu fördern, sind diese Steigleitungsrohre als Vakuum-Doppelrohre ausgebildet, um eine gute Wärmeisolation zu schaffen und damit den Wärmeverlust des geförderten Thermalwassers über die gesamte Förderhöhe hinweg möglichst gering zu halten.

Die Evakuierung des Ringraumes derartiger Steigleitungsrohre erfolgt über Vakuumpumpen und nach Erzeugung eines gewünschten Vakuums innerhalb des Ringraumes muß dieser luftdicht verschlossen werden.

Für die Absaugung und Abdichtung können prinzipiell Ventile, insbesondere in Art von Rückschlagventilen, eingesetzt werden. Derartige Ventile sind aber entweder relativ groß und somit nicht ohne weiteres bei gattungsgemäßen Steigleitungsrohren einsetzbar oder aber - bei kleinerer, vertretbarer Bauweise - derart teuer, daß aus wirtschaftlichen Gründen der Einsatz solcher Spezialventile nicht in Betracht kommt.

Der vorliegenden Erfmdung liegt die Aufgabe zugrunde, ein Steigleitungsrohr der gattungsgemäßen Art zu schaffen, welches auf wirtschaftlich vertretbare Weise nach der Evakuierung seines Ringraumes abdichtbar ist.

Diese Aufgabe wird erfindungsgemäß dadurch gelöst, daß der evakuierte Ringraum des Vakuum-Doppelrohres mit einer mit einem Gewinde versehenen Absaugbohrung ausgestattet und durch eine Abdichtschraube abgedichtet ist.

Die Verwendung einer Abdichtschraube zur wirksamen Abdichtung des evakuierten Ringraumes stellt eine extrem einfache und preiswerte Möglichkeit dar, diesen evakuierten Ringraum einwandfrei abzudichten und das Vakuum innerhalb des Ringraumes zu gewährleisten, ohne dass aufwendige Spezialventile eingesetzt werden müssen.

Nach einer Weiterbildung der Erfindung ist vorgesehen, daß der evakuierte Ringraum an einem stirnseitigen Ende durch eine sowohl mit dem inneren wie auch mit dem äußeren Rohr dicht verbundenen und die Gewindebohrung aufweisenden Ringstutzen abgeschlossen ist.

Ein derartiger massiver Ringstutzen bietet auch im Verbindungsbereich zwischen zwei gleichartigen Steigleitungsrohren einen hohen Isolationseffekt, so daß Wärmeverluste des geförderten Thermalwassers auch im jeweiligen Verbindungsbereich mehrerer Steigleitungsrohre äußerst gering gehalten werden können.

Vorteilhafterweise ist der Außendurchmesser des Ringstutzens dem Außendurchmesser des äußeren Rohres entsprechend gewählt. Damit ergibt sich in diesem stirnseitigen Bereich ein glattflächiger, stufenloser Übergang zwischen dem äußeren Rohr einerseits und dem Ringstutzen andererseits.

Vorteilhafterweise ist die Absaugbohrung zur Evakuierung des Doppelrohres innerhalb des Ringstutzens angeordnet und besteht aus einer radial in den Ringstutzen eingebrachten und die Abdichtschraube aufnehmenden Gewindebohrung und einer damit in Verbindung stehenden, axial verlaufenden und in den Ringraum zwischen dem inneren und dem äußeren Rohr einmündenden Bohrung. Die radiale Anordnung der Gewindebohrung hat den Vorteil, dass diese leichter zugänglich und besser auffindbar ist.

Durch die Verlagerung der Absaugbohrung in dem Bereich des Ringstutzens wird der Vorteil erzielt, daß die Abdichtschraube in einen relativ massiven Wandungsbereich eingeschraubt wird und somit eine besonders sichere und zuverlässige Abdichtung der gesamten Absaugbohrung gewährleisten kann.

Weitere Merkmale der Erfindung sind Gegenstand weiterer Unteransprüche.

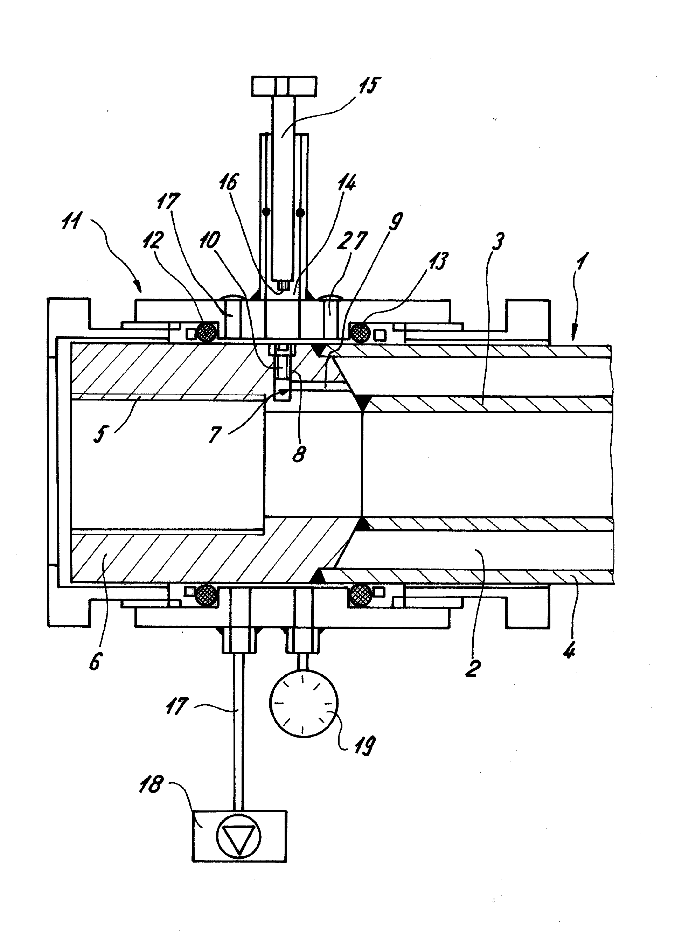

Ein Ausführungsbeispiel ist in der beigefügten Zeichnung dargestellt und wird im folgenden näher beschrieben.

Die einzige Figur zeigt einen schematisch dargestellten Längsschnitt durch einen stirnseitigen Endbereich eines erfindungsgemäßen Steigleitungsrohres mit einer darauf aufgesetzten Absaugglocke.

In der Zeichnung ist ein stirnseitiger Endbereich eines insgesamt mit dem Bezugszeichen 1 versehenen Steigleitungsrohres für einen Tiefbrunnen zur Förderung von Thermalwasser gezeigt. Dieses Steigleitungsrohr 1 ist als Vakuum-Doppelrohr mit einem evakuierten Ringraum 2 ausgebildet. Dieser Ringraum 2 liegt zwischen einem Innenrohr 3 und einem Außenrohr 4.

Das Steigleitungsrohr 1 ist an seinem in der Zeichnung nicht dargestellten stirnseitigen Ende in an sich bekannter Weise mit einem Gewindezapfen und an seinem in der Zeichnung gezeigten stirnseitigen Ende mit einer Gewindebohrung 5 versehen, deren Durchmesser dem Durchmesser des Gewindezapfens am anderen stirnseitigen Ende entspricht.

Hierdurch können mehrere gleichartige Steigleitungsrohre 1 miteinander verschraubt werden.

Im dargestellten Ausführungsbeispiel ist die Gewindebohrung 5 in einen Ringstutzen 6 eingebracht, der sowohl mit dem Innenrohr 3 wie auch mit dem Außenrohr 4 fest und abdichtend verbunden ist. Vorzugsweise ist der Ringstutzen 6 mit dem Innenrohr 3 und dem Außenrohr 4 verschweißt.

In den Ringstutzen 6 ist eine Absaugbohrung 7 eingebracht, über welche der Ringraum 2 des Steigleitungsrohres 1 evakuierbar ist. Die Absaugbohrung 7 umfaßt eine radial in den Ringstutzen 6 eingebrachte Gewindebohrung 8 und eine damit in Verbindung stehende, axial verlaufende und in den Ringraum 2 einmündende Bohrung 9, wobei die Gewindebohrung 8 eine Abdichtschraube 10 zur Abdichtung des Ringraumes 2 nach einer Evakuierung dient.

Zur Evakuierung des besagten Ringraumes 2 kann auf das dargestellte stirnseitige Ende des Steigleitungsrohres 1 eine insgesamt mit dem Bezugszeichen 11 versehene Absaugglocke aufgesetzt werden. Diese Absaugglocke 11 ist mit zwei Dichtringen 12 und 13 versehen, welche fest und abdichtend auf den Ringstutzen 6 bzw. das äußere Rohr 4 über Muttern aufpreßbar sind. Damit wird zwischen den beiden Dichtringen 12 und 13 ein nach außen hin abgedichteter Bereich gebildet. Durch diesen abgedichteten Bereich verläuft radial ein nach außen hin ebenfalls abgedichteter Einführungskanal 14 für ein Werkzeug 15, welches an seinem dem Ringstutzen 6 zugewandten stirnseitigen Ende mit einem Außensechskant 16 versehen ist. Dieser Außensechskant 16 dient zur Betätigung der schon erwähnten Abdichtschraube 10, die mit einem mit Innensechskant versehenen Schraubenkopf ausgestattet ist, mittels dem eine Dichtung festklemmbar ist.

Zwischen den beiden Dichtringen 12 und 13 mündet in den dadurch abgedichteten Ringraum sowohl eine Saugleitung 17 einer Vakuumpumpe 18 wie auch ein Meßfühler eines Manometers 19.

Vorzugsweise ist die Absaugglocke 11 gegen einen Endanschlag in axialer Richtung auf das stirnseitige Ende des Steigleitungsrohres 1 aufschiebbar, der an der Stirnseite des Steigleitungsrohres anlegbar ist. Die Lage des Anschlages ist dabei so gewählt, daß bei Anlage der Absaugglocke 11 an diesem Anschlag die Längsachse des Werkzeuges 15 exakt in der Ebene der Längsachse der Gewindebohrung 8, die, wie oben erwähnt, einen Teil der Absaugbohrung 7 bildet, liegt. Durch Verdrehen der Absaugglocke 11 auf dem Steigleitungsrohr 1 kann die Längsachse des Werkzeuges 15 dann auch in eine Flucht mit der Längsachse der besagten Gewindebohrung 8 gebracht werden, so daß nach dem Evakuieren des Ringraumes 2 noch unter Aufrechterhaltung der Wirkung der Vakuumpumpe 18 die Abdichtschraube 10 in die Gewindebohrung 8 eingeschraubt werden kann.

Dies setzt natürlich voraus, daß vor dem Ansetzen der Absaugglocke 11 auf das Steigleitungsrohr 1 die besagte Abdichtschraube 10 auf das Werkzeug 15 mit einem am stirnseitigen Ende vorgesehenen Sechskant 16 aufgesetzt wird.

Um die fluchtende Lage der Längsachse des Werkzeuges 15 zur Längsachse der Gewindebohrung 8 leichter finden zu können, sind im Umgebungsbereich des Werkzeuges 15 Lichtgläser 17 vorgesehen, die eine visuelle Beobachtung und Erkennung der Gewindebohrung 8 ermöglichen, sobald diese in den gewünschten Verschwenkbereich der Absaugglocke 11 gelangt.

Selbstverständlich wird zur sicheren Abdichtung der Absaugbohrung 7 die Abdichtschraube 10 gegen einen nicht weiter dargestellten Dichtring angeschraubt, wobei selbstverständlich auch weitere oder andere Abdichtmittel, die dem Fachmann bekannt sind, Verwendung finden können.

Nachdem der Ringraum 2 entsprechend evakuiert ist und die Absaugbohrung 7 einwandfrei abdichtend verschlossen ist, kann die Absaugglocke 11 wieder vollständig vom Steigleitungsrohr 1 abgenommen und für die Evakuierung eines weiteren Steigleitungsrohres verwendet werden.

Das Steigleitungsrohr 1 kann in Abweichung vom dargestellten Ausführungsbeispiel natürlich auch mit einer Absaugbohrung ausgestattet sein, die ausschließlich in Achsrichtung des Steigleitungsrohres 1 verläuft und somit stirnseitig beispielsweise aus dem Ringstutzen oder einem anderen Abschlußelement austritt. Bei einer derartigen Ausführungsform würde dann natürlich auch wieder entsprechend die Abdichtschraube axial zum Steigleitungsrohr 1 verlaufen müssen. Um eine derart axial verlaufende Abdichtschraube unter Vakuum in Dichtstellung einschrauben zu können, wäre bei einer angepaßten Absaugglocke das Werkzeug 15 und der entsprechende Einführungskanal 14 ebenfalls axial zum Steigleitungsrohr 1 verlaufend anzuordnen.

## Patentansprüche

1. Steigleitungsrohr (1), insbesondere für einen Tiefbrunnen zur Förderung von Wasser aus größeren Tiefen, wobei das Steigleitungsrohr (1) als Vakuum-Doppelrohr mit einem evakuierten Ringraum (2) ausgebildet ist und an einem stirnseitigen Ende mit einem Gewindezapfen und am anderen Ende mit einer dem Durchmesser des Gewindezapfens entsprechenden Gewindebohrung (5) versehen ist, **dadurch gekennzeichnet, daß** der evakuierte Ringsraum (2) des Vakuum-Doppelrohres mit einer mit einem Gewinde versehenen Absaugbohrung (7) ausgestattet und durch eine Abdichtschraube (8) abgedichtet ist.

2. Steigleitungsrohr nach Anspruch 1, **dadurch gekennzeichnet, daß** der evakuierte Ringraum (2) an einem stirnseitigen Ende durch einen sowohl mit dem inneren wie auch mit dem äußeren Rohr (3, 4) dicht verbundenen und die Gewindebohrung (5) aufweisenden Ringstutzen (6) abgeschlossen ist.

3. Steigleitungsrohr nach Anspruch 2, **dadurch gekennzeichnet, daß** der Außendurchmesser des Ringstutzens (6) dem Außendurchmesser des äußeren Rohres (4) entspricht.

4. Steigleitungsrohr nach einem der vorhergehenden Ansprüche, **dadurch gekennzeichnet, daß** die Absaugbohrung (7) zur Evakuierung des Doppelrohres innerhalb des Ringstutzens (6) angeordnet ist und aus einer radial in den Ringstutzen eingebrachten und die Abdichtschraube (10) aufnehmenden Gewindebohrung (8) und einer damit in Verbindung stehenden, axial verlaufenden und in den Ringraum (2) zwischen dem inneren und dem äußeren Rohr (3, 4) einmündenden Bohrung (9) besteht.

5. Steigleitungsrohr nach einem der Ansprüche 1 bis 3, **dadurch gekennzeichnet, daß** die Absaugbohrung zur Evakuierung des Ringraumes (2) zwischen dem Innenrohr (3) und dem Außenrohr (4) in Achsrichtung des Steigleitungsrohres (1) verläuft.

6. Steigleitungsrohr nach einem der vorhergehenden Ansprüche, **dadurch gekennzeichnet, daß** die Abdichtschraube (10) einen Schraubenkopf mit Innensechskant aufweist.

7. Steigleitungsrohr nach einem der vorhergehenden Ansprüche, **dadurch gekennzeichnet, daß** der Schraubenkopf der Abdichtschraube (10) gegen einen die Gewindebohrung (8) nach außen hin abdichtenden Dichtring angezogen ist.
